# EUROPÄISCHE PATENTSCHRIFT

(11) **EP 0 814 054 B1**
(45) Veröffentlichungstag und Bekanntmachung des Hinweises auf die Patenterteilung: **22.03.2000**
(21) Anmeldenummer: 97107907.4
(22) Anmeldetag: 15.05.1997
(51) Int. Cl.: C01B 3/38, B01J 8/02, B01J 8/06, C01B 3/32, H01M 8/06, C01B 3/48

(54) **Reformierungsreaktor, insbesondere zur Wasserdampfreformierung von Methanol**
Reformer, especially for the steam reformation of methanol
Réacteur de reformage, spécialement pour le reformage à la vapeur de méthanol

(30) Priorität: 19.06.1996 DE 19624433
(43) Veröffentlichungstag der Anmeldung: 29.12.1997
(73) Patentinhaber: DBB Fuel Cell Engines GmbH, 73230 Kirchheim/Teck-Nabern (DE)
(72) Erfinder: Autenrieth, Rainer, 89155 Erbach (DE); Hänfling, Josef, 88677 Markdorf (DE); Heil, Dietmar, 88477 Schwendi (DE); Steinke, Heinz, 73773 Aichwald (DE); Wiesheu, Norbert, 89312 Günzburg (DE)
(74) Vertreter: Kocher, Klaus-Peter

(56) Entgegenhaltungen:
- US-A- 3 522 019
- US-A- 5 248 566
- PATENT ABSTRACTS OF JAPAN vol. 095, no. 003, 28.April 1995 & JP 06 345408 A (TOKYO GAS CO LTD;OTHERS: 01), 20.Dezember 1994,
- PATENT ABSTRACTS OF JAPAN vol. 014, no. 302 (E-0946), 28.Juni 1990 & JP 02 098064 A (FUJI ELECTRIC CORP RES & DEV LTD), 10.April 1990,

## Beschreibung

Die Erfindung bezieht sich auf einen Reformierungsreaktor mit drei seriell angeordneten, mit je einer Katalysatorpelletschüttung beladenen Reaktorstufen. Derartige Reaktoren dienen beispielsweise zur Wasserstoffgewinnung mittels Wasserdampfreformierung oder partieller Oxidation von Methanol. Bei einer mobilen Anwendung in einem brennstoffzellenbetriebenen Kraftfahrzeug kann ein derartiger Reaktor zur Speisung der Brennstoffzellen mit Wasserstoff dienen.

In der Patentschrift US 5 248 566 ist ein für den Einsatz in brennstoffzellenbetriebenen Kraftfahrzeugen geeigneter Reformierungsreaktor der eingangs genannten Art beschrieben, bei dem die eingangsseitige Reaktorstufe durch Einbringen eines entsprechenden Katalysatormaterials zur partiellen Oxidation von Methanol ausgelegt ist, während die mittlere Reaktorstufe durch Einbringen eines anderen, geeigneten Katalysatormaterials zur Wasserdampfreformierung von Methanol eingerichtet ist. Die ausgangsseitige Reaktorstufe ist zur Bewirkung der Umwandlungsreaktion von Kohlenmonoxid in Kohlendioxid ausgelegt. Die zur Durchführung der endothermen Wasserdampfreformierungsreaktion in der mittleren Reaktorstufe notwendige Wärme wird von der eingangsseitigen Reaktorstufe durch die exotherme partielle Methanoloxidation erzeugt und mit dem Reaktionsgasstrom in die mittlere Reaktorstufe eingebracht.

In der Patentschrift US 5 401 589 ist ein dreistufiger Reformierungsreaktor zur Wasserdampfreformierung von Methanol offenbart, bei dem ein mit einer durchgehenden Katalysatorpelletschüttung gefüllter Gesamtreaktionsraum vorgesehen ist, der in drei untereinanderliegende Reaktorstufen dadurch unterteilt ist, daß diese Stufen auf unterschiedlichen Temperaturen gehalten werden, und zwar die eintrittsseitige, obere Stufe auf ca. 300°C, die mittlere Stufe auf ca. 275°C und die ausgangseitige Stufe auf ca. 225°C. Die Beheizung der drei Reaktorstufen erfolgt über eine wärmeleitfähige Trennwand, über die diese Reaktorstufen mit unterschiedlicher Kontaktfläche in Wärmekontakt zu einem gemeinsamen Heizraum stehen.

In der Patentschrift US 3.522.019 ist eine Reformierungsreaktoranlage mit drei seriell angeordneten Reaktorstufen offenbart, die getrennt voneinander angeordnet und jeweils mit einer geeigneten Katalysatorschüttung beladen sind. Die erste, eingangsseitige Stufe fungiert als Vorreaktor und wird auf eine Temperatur von etwa 370° C bis 650° C beheizt. Zu diesem Zweck besitzt der Vorreaktor einen Wärmeübertrageraufbau, durch den das die mittlere Reaktorstufe verlassende, heiße Reformatgas geleitet wird, wodurch der Reaktionsraum des Vorreaktors beheizt wird. Die mittlere Reaktorstufe besitzt ebenfalls einen Wärmeübertrageraufbau zur Beheizung des zugehörigen Reaktionsraums, wobei die Beheizung in diesem Fall durch einen Brenner erfolgt. Die dritte, ausgangsseitige Reaktorstufe fungiert als Shiftstufe zur exothermen Umwandlung von Kohlenmonoxid in Kohlendioxid. Die Shiftstufe beheizt eine angekoppelte Wasserstoffreinigungsstufe, die eine selektiv für Wasserstoff durchlässige Membran zur Wasserstoffabtrennung beinhaltet.

Aus der Offenlegungsschrift JP 06345408 A ist ein Reformierungsreaktor in Schichtstapelbauweise beschrieben, bei dem ein Wasserstoffabzugsraum parallel zur Stapelrichtung beidseits von einer wasserstoffdurchlässigen Membran begrenzt ist, auf deren anderer Seite sich jeweils eine Katalysatorschichtung anschließt, der ein Kohlenstoff-Rohmaterial und Dampf zwecks Durchführung der gewünschten Reformierungsreaktion senkrecht zur Stapelrichtung zugeführt wird. Auf ihrer dem Wasserstoffabzugsraum gegenüberliegenden Seite schließt sich an diese Reformierungsreaktionsschichten jeweils eine Verbrennungsprozeßschicht an, in die ein Kohlenwasserstoff-Brennstoff und Luft senkrecht zur Stapelrichung eingespeist werden. Mit der dort stattfindenden exothermen Oxidation werden die jeweils angrenzenden Reformierungsreaktionsschichten beheizt.

Der Erfindung liegt als technisches Problem die Bereitstellung eines neuartigen, mit relativ geringem Aufwand realisierbaren und für mobile Anwendungen besonders geeigneten Reformierungsreaktors der eingangs genannten Art zugrunde.

Die Erfindung löst dieses Problem durch die Bereitstellung eines Reformierungsreaktors mit den Merkmalen des Anspruchs 1. Bei diesem Reaktor bleibt die eingangsseitige Reaktorstufe unbeheizt, ihr zugehöriger Reaktionsraum ist jedoch ebenso wie die beiden anderen Reaktorstufen mit einer geeigneten Katalysatorpelletschüttung beladen. Die erste Reaktorstufe dient dadurch als Filter zum Ausfiltern von Schwebepartikeln sowie von Wasseroder Methanoltropfen, was Schädigungen des Katalysatormaterials in der für die Reformierung besonders wichtigen, mittleren Reaktorstufe verhindert. Zudem kann die erste Reaktorstufe bereits einen gewissen Teilumsatz der Reformierung von Methanol bewerkstelligen, was die zweite Reaktorstufe entlastet. Des weiteren werden die von Lastwechseln, wie sie besonders beim Einsatz in Kraftfahrzeugen auftreten, verursachten Temperaturschwankungen des Eduktgases durch die Wärmekapazität der eingangsseitigen Reaktorstufe und durch die Abkühlung des eintretenden, heißen Gasstroms aufgrund des endothermen Reaktionsteilumsatzes gedämpft. Mit der unbeheizten ausgangsseitigen Reaktorstufe ist die Umwandlung von Kohlenmonoxid in Kohlendioxid möglich, um den Kohlenmonoxidgehalt zu minimieren, was besonders für die anschließende Verwendung des reformierten Gasstroms in einer Brennstoffzellenanordnung erwünscht ist. Durch die Wärmekapazität dieser ausgangsseitigen Reaktorstufe werden Temperaturschwankungen in der mittleren Reaktorstufe aufgrund von Lastwechseln weiter gedämpft. Dadurch treten bei Lastwechseln nur vergleichsweise geringe Schwankungen des Kohlenmonoxidgehaltes und der Gasaustrittstemperatur auf. Die mittlere Reaktorstufe dient zur Durchführung der eigentlichen Reformierungsreaktion und kann aufgrund der kohlenmonoxidumwandelnden Funktion der austrittsseitigen Reaktorstufe bei höheren Temperaturen und mit größeren Temperaturschwankungen betrieben werden. Insgesamt erlaubt dies bei gegebenem Reformierungsleistungsbedarf einen einfachen und kompakten Reaktoraufbau, der gegenüber Temperaturschwankungen bei Lastwechseln relativ unempfindlich ist.

Bei einem nach Anspruch 2 weitergebildeten Reformierungsreaktor sind die drei Reaktorstufen von übereinanderliegenden Abschnitten eines mit einer durchgehenden Katalysatorpelletschüttung gefüllten Gesamtreaktionsraumes gebildet, von dem nur der mittlere Abschnitt in Wärmekontakt zu einem Heizraum steht. Die durchgehende Katalysatorpelletschüttung des Gesamtreaktionsraums ermöglicht ein automatisches Auffüllen der für die Reformierung wichtigen mittleren Reaktorstufe mit Material aus der darüberliegenden, eintrittsseitigen Stufe, wenn die Katalysatorpelletschüttung Setzungserscheinungen beispielsweise aufgrund von Erschütterungen zeigt, wie sie bei Anwendungen in Kraftfahrzeugen während des Fahrbetriebs auftreten. Dabei ist auch ein schräger Einbau des Reformierungsreaktors in das Fahrzeug möglich, ohne die automatische Auffüllfunktion zu stören.

Bei einem nach Anspruch 3 weitergebildeten Reformierungsreaktor ist die primär reformierungsaktive, mittlere Reaktorstufe als Reaktorrohrbündel ausgelegt, das die darüberliegende, eintrittsseitige Reaktorstufe in Form eines katalysatorbeladenen Verteilerraums mit der darunterliegenden, austrittsseitigen Reaktorstufe in Form eines katalysatorbeladenen Sammelraums verbindet und einen zugehörigen Heizraum durchsetzt.

Bei einem nach Anspruch 4 weitergebildeten Reformierungsreaktor ist der Heizraum als Heizrohrbündel gestaltet, dessen Rohre sich quer durch die mittlere Reaktorstufe hindurch erstrecken.

Bevorzugte Ausführungsformen der Erfindung sind in den Zeichnungen dargestellt und werden nachfolgend beschrieben. Hierbei zeigen:
- Fig. 1: eine Längsschnittansicht eines Gesamtreaktionsraums eines dreistufigen Reformierungsreaktors zur Wasserdampfreformierung von Methanol mit von einem Heizrohrbündel durchsetzter mittlerer Reaktorstufe und
- Fig. 2: eine Längsschnittansicht eines Gesamtreaktionsraums eines dreistufigen Reformierungsreaktors zur Wasserdampfreformierung von Methanol mit als Rohrbündel gestalteter mittlerer Reaktorstufe.

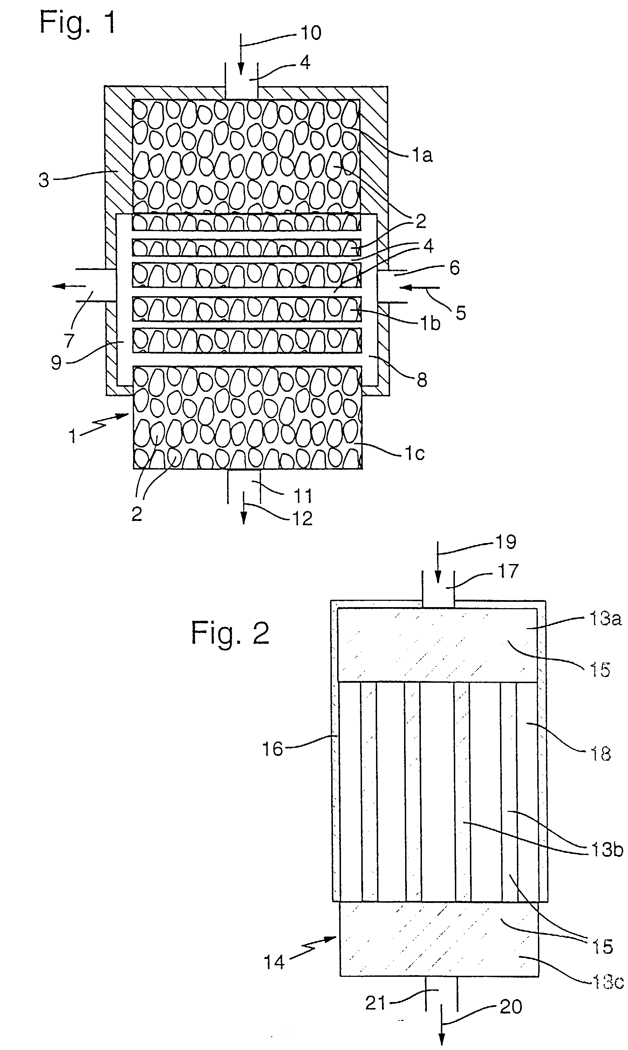

Der in Fig. 1 mit seinem hier interessierenden Teil gezeigte Reformierungsreaktor zur Wasserdampfreformierung von Methanol beinhaltet drei Reaktorstufen (1a, 1b, 1c), die von drei übereinanderliegenden Abschnitten eines Gesamtreaktionsraums (1) gebildet sind, der durchgehend mit einer geeigneten Katalysatorpelletschüttung (2) gefüllt ist. Als Katalysatormaterial kann beispielsweise ein CuO/ZnO/Al₂O₃-Material verwendet werden. Die obere (1a) und die mittlere Reaktorstufe (1b) sind von einem thermisch isolierenden Gehäuse (3) umgeben, das an der Oberseite einen Gaseinlaß (4) aufweist, so daß die obere Reaktorstufe (1a) als eintrittsseitige Reaktorsstufe fungiert. Der mittleren Reaktorstufe (1b) ist eine Heizeinrichtung zugeordnet, die ein quer durch den mittleren Abschnitt (1b) des Gesamtreaktionsraums (1) hindurchgeführtes Heizrohrbündel (4) beinhaltet, durch die ein Heizfluid (5) hindurchgeleitet werden kann. Zu diesem Zweck ist das umgebende Gehäuse (3) mit einem seitlichen Heizfluideinlaß (6) und einem gegenüberliegenden Heizfluidauslaß (7) versehen. Zur Verteilung des Heizfluids auf die einzelnen Rohre des Heizrohrbündels (4) besitzt das Gehäuse (3) eine als Heizfluidverteilerraum fungierende, innenseitige, seitliche Ausnehmung (8) und auf der gegenüberliegenden Innenseite analog eine als Heizfluidsammelraum dienende Ausnehmung (9). Mit dieser Heizeinrichtung wird die mittlere Reaktorstufe (1b) auf einer für die Durchführung der Reformierungsreaktion optimalen Temperatur beispielsweise im Bereich zwischen 280°C und 350°C gehalten. Demgegenüber bleiben die eintrittsseitige (1a) und die austrittsseitige Reaktorstufe (1c) unbeheizt. Da sich die austrittsseitige Reaktorstufe (1c) außerhalb des thermisch isolierenden Gehäuses (3) befindet, kann sie von der Umgebungsluft gekühlt werden.

Die Rohre des Heizrohrbündels (4) sind so dimensioniert und voneinander beabstandet, daß einerseits eine gleichmäßige Beheizung der mittleren Reaktorstufe (1b) erzielt wird und andererseits die einzelnen Pellets der Pelletschüttung (2) zwischen den Rohren nach unten wandern können, wenn Setzerscheinungen der Schüttung (2) auftreten. Solche Setzerscheinungen können durch eine anfänglich lose Reaktionsraumbefüllung mit den Pellets sowie durch Abrieb der Pellets aneinander und durch Brechen einzelner Pellets aufgrund von Erschütterungen verursacht sein, wie sie beim Einsatz in Kraftfahrzeugen während des Fahrbetriebs auftreten. Die durchgehende, volle Befüllung des Gesamtreaktionsraums (1) mit dem Katalysatorpelletmaterial ermöglicht es beim Auftreten solcher Setzerscheinungen, daß Katalysatormaterial, das sich von der mittleren Reaktorstufe (1b) in die untere Reaktorstufe (1c) absetzt, durch Katalysatormaterial ersetzt wird, das von der oberen (1a) in die mittlere Reaktorstufe (1b) nachfolgt. Dies realisiert ein automatisches Auffüllen der für die Durchführung der Reformierungsreaktion wichtigsten, mittleren Reaktorstufe (1b) auch noch bei schrägem Einbau des Reformierungsreaktors in das Fahrzeug.

Für den solchermaßen aufgebauten Reformierungsreaktor ergibt sich somit folgende Betriebsweise. Das heiße, zu reformierende Gasgemisch (10) tritt von oben in die eintrittsseitige Reaktorstufe (1a) ein, wo ein gewisser, geringerer Anteil reformiert wird. Dadurch ist die Wasserdampf- und Methanolkonzentration beim Eintritt des umzusetzenden Gasgemischs in die mittlere Reaktorstufe (1b) bereits etwas verringert, so daß die baulich komplexere, mittlere Reaktorstufe (1b) relativ klein und kompakt gebaut sein kann und die durch Methanol und Wasserdampf bedingte Katalysatoralterung verringert wird. Gleichzeitig werden von der eintrittsseitigen Reaktorstufe (1a) Schwebepartikel ausgefiltert, so daß ein Heißgasfilter vor der mittleren Reaktorstufe (1b) entbehrlich ist. Ebenso werden von der eintrittsseitigen Reaktorstufe (1a) Wasser und Methanoltropfen ausgefiltert, was eine dadurch bedingte Schädigung des Katalysatormaterials in der mittleren Reaktorstufe (1b) verhindert und dessen Alterung gering hält. Außerdem braucht dadurch keine Tropfenfreiheit im Eduktgasstrom gegeben sein, was den Aufbau eines vor dem Reaktionsraum-Gaseinlaß (4) angeordneten Verdampfers vereinfacht. Durch die Wärmekapazität der eintrittsseitigen Reaktorstufe (1a) und die durch den endothermen Teilmethanolumsatz bedingte Abkühlung des heißen, zugeführten Gasgemischs (10) werden zudem Temperaturschwankungen des Eduktgases, wie sie bei Lastwechseln auftreten, gedämpft.

In der geeignet beheizten, mittleren Reaktorstufe (1b) findet dann der hauptsächliche Methanolumsatz mittels Wasserdampfreformierung statt. Wegen der nachfolgenden, dritten Reaktorstufe (1c) braucht dabei nicht primär auf minimalen Kohlenmonoxidgehalt geachtet werden, vielmehr kann die mittlere Reaktorstufe (1b) bei relativ hoher Temperatur und mit vergleichsweise großen Temperaturschwankungen betrieben werden. Bei gegebenener, geforderter Reformierungsleistung erlaubt dies eine baulich relativ kleinvolumige Auslegung der mittleren Reaktorstufe (1b).

In der nicht beheizten, luftgekühlten, austrittsseitigen Reaktorstufe (1c) wird dann der Kohlenmonoxidgehalt des reformierten Gasgemischs durch Umwandlung in Kohlendioxid verringert, wozu in dieser Reaktorstufe (1c) eine Temperatur von weniger als 280°C herrscht. Die Wärmekapazität der austrittsseitigen Reaktorstufe (1c) bewirkt eine weitere Dämpfung von Temperaturschwankungen, die in der mittleren Reaktorstufe (1b) bei Lastwechseln auftreten. Der aus einem Gasauslaß (11) aus der dritten Reaktorstufe (1c) austretende Gasstrom (12) besitzt somit unter den unterschiedlichen Lastbedingungen eine jeweils möglichst hohe Konzentration an gebildetem Wasserstoff bei gleichzeitig niedriger Kohlenmonoxidkonzentration. Dieser Gasstrom (12) kann folglich beispielsweise zur Speisung einer Brennstoffzellenanordnung in einem Kraftfahrzeug dienen.

Der in Fig. 2 gezeigte Teil eines weiteren Reformierungsreaktors beinhaltet ebenfalls wieder drei seriell angeordnete Reaktorstufen (13a, 13b, 13c), die von drei übereinanderliegenden Abschnitten eines Gesamtreaktionsraums (14) gebildet sind, der durchgehend mit einer hier nur schraffiert angedeuteten Katalysatorpelletschüttung (15), z.B. aus einem CuO/ZnO/Al₂O₃-Material, befüllt ist. Wie beim Ausführungsbeispiel von Fig. 1 sind die obere Reaktorstufe (13a) und die mittlere Reaktorstufe (13b) von einem thermisch isolierenden Gehäuse (16) umgeben, das oberseitig einen Gaseinlaß (17) aufweist, während die unterste Reaktorstufe (13c) mit der Umgebungsluft in Wärmeaustauschverbindung steht. Als wesentlicher Unterschied zum Reaktor von Fig. 1 ist beim Beispiel von Fig. 2 die mittlere Reaktorstufe (13b) als Reaktorrohrbündel realisiert, dessen Rohre sich von der oberen, eintrittsseitigen Reaktorstufe (13a) zur unteren, austrittsseitigen Reaktorstufe (13c) erstrecken. Zur Beheizung dieses Reaktorrohrbündels (13b) dient der die Rohre umgebende und von dem thermisch isolierenden Gehäuse (16) eingeschlossene Raum zwischen der eintrittsseitigen (13a) und der austrittsseitigen Reaktorstufe (13c), der als Heizraum (18) fungiert, durch den über je einen nicht gezeigten Heizfluideinlaß und -auslaß ein Heizfluid hindurchgeleitet wird.

Für den solchermaßen aufgebauten Reformierungsreaktor ergeben sich dieselbe Betriebsweise und dieselben Vorteile bezüglich der Reformierung eines eintretenden Wasserdampf/Methanol-Gasgemischs (19) zu einem wasserstoffreichen Reaktionsgas (20) mit sehr geringem Kohlenmonoxidgehalt, wie es aus einem gehörigen Auslaß (21) aus der unteren Reaktorstufe (13c) austritt. Erwähnt sei hierzu nur noch, daß die Rohre des Reaktorrohrbündels (13b) mit ausreichender Weite im Vergleich zum typischen Durchmesser der Katalysatorpellets gestaltet sind, so daß bei Setzerscheinungen der durchgehenden Katalysatorpelletschüttung (15) im Gesamtreaktionsraum (14) Katalysatormaterial aus der obersten Reaktorstufe (13a) in die Rohre der mittleren Reaktorstufe (13b) nachrücken kann. Auf diese Weise ist, wie im Beispiel von Fig. 1, stets eine vollständige Befüllung der mittleren, hauptsächlich für die Durchführung der Reformierungsreaktion verantwortlichen Reaktorstufe (13b) mit dem Katalysatormaterial gewährleistet.

Insgesamt ist anhand der beiden beschriebenen Beispiele zu erkennen, daß die erfindungsgemäßen Reformierungsreaktoren einfach und kompakt aufgebaut sein können, eine hohe Unempfindlichkeit gegenüber Temperaturschwankungen bei Lastwechseln besitzen und beim Einsatz in Kraftfahrzeugen gegen Erschütterungen und Schräglagen im Fahrzeug unempfindlich sind. Es versteht sich, daß erfindungsgemäße Reformierungsreaktoren je nach Wahl des Katalysatormaterials und der Temperatur der allein beheizten mittleren Reaktorstufe außer zur Wasserdampfreformierung von Methanol auch für andere Reformierungsreaktionen geeignet sind.

## Patentansprüche

1. Reformierungsreaktor, insbesondere zur Wasserdampfreformierung von Methanol, mit
- drei strömungstechnisch seriell angeordneten, nacheinander von einem hindurchgeleiteten Gasgemisch durchströmten Reaktorstufen (1a, 1b), 1c), von denen jede mit einer Katalysatorpelletschüttung (2) beladen ist,
**dadurch gekennzeichnet, daß**
- eine Heizeinrichtung (4) vorgesehen ist, die nur der mittleren Reaktorstufe (1b) zugeordnet ist, um sie im Betrieb durch Beheizung auf einer für die Durchführung der Reformierungsreaktion geeigneten Temperatur zu halten, während den beiden anderen Reaktorstufen keine benutzte Heizeinrichtung zugeordnet ist.

2. Reformierungsreaktor nach Anspruch 1, weiter
**dadurch gekennzeichnet, daß**
die drei Reaktorstufen (1a, 1b, 1c) von übereinanderliegenden Abschnitten eines mit einer durchgehenden Katalysatorpelletschüttung (2) befüllten Gesamtreaktionsraumes (1) gebildet sind, dessen mittlerer Abschnitt in Wärmekontakt zu einem Heizraum (4) steht.

3. Reformierungsreaktor nach Anspruch 2, weiter
**dadurch gekennzeichnet, daß**
die mittlere Reaktorstufe als Reaktorrohrbündel (13b) gebildet ist, dessen Rohre sich von der eintrittsseitigen, oberen, als Verteilerraum fungierenden Reaktorstufe (13a) durch einen zwischenliegenden Heizraum (18) hindurch zur austrittsseitigen, unteren, als Sammelraum fungierenden Reaktorstufe (13c) erstrekken.

4. Reformierungsreaktor nach Anspruch 2, weiter
**dadurch gekennzeichnet, daß**
der Heizraum als Heizrohrbündel (4) gestaltet ist, dessen Rohre sich quer durch die mittlere Realtorstufe (1b) hindurch erstrekken.

## Claims

1. A reforming reactor, particularly for the water vapour reforming of methanol with
- three flow-orientated serially disposed reactor stages (1a, 1b, 1c) traversed one after another by a through-flowing gas mixture and of which each one is loaded with bulk pellet catalyst material (2),
characterised in that
- a heating means (4) is provided associated only with the middle reactor stage (1b) in order to maintain it in operation by heating to a temperature suitable for carrying out the reforming reaction while no used heating means is associated with the other two reactor stages.

2. A reforming reactor according to claim 1, further characterised in that the three reactor stages (1, 1b, 1c) are formed by superimposed portions of an overall reaction space (1) filled with a continuous loose bulk pellet catalyst (2) the middle portion of which is in heat contact with a heating space (4).

3. A reforming reactor according to claim 2, further characterised in that the middle reactor stage is constituted as a bundle of reactor tubes (13b) of which the tubes extend from the inlet side upper reactor stage (13a) which functions as a distributor space through an intermediate heating space (18) to the outlet side blower reactor stage (13c) which functions as a collecting space.

4. A reforming reactor according to claim 2, further characterised in that the heating space is devised as a bundle of heating tubes (4) of which the tubes extend transversely through the middle reactor stage (1b).

## Revendications

1. Réacteur de reformage, notamment pour le reformage à la vapeur d'eau de méthanol, comprenant trois étages de réacteur (1a, 1b, 1c) disposés en série sur le plan des écoulements de fluides, traversés successivement par un écoulement d'un mélange de gaz que l'on y fait passer, et dont chacun est chargé d'un remplissage en vrac de pellets de catalyseur (2), **caractérisé** en ce qu'il est prévu un dispositif de chauffage (4) qui n'est associé qu'à l'étage de réacteur central (1b), en vue de le maintenir, durant le fonctionnement, par chauffage, à une température adaptée à l'exécution de la réaction de reformage, tandis qu'aux deux autres étages de réacteur n'est associé aucun dispositif de chauffage utilisé.

2. Réacteur de reformage selon la revendication 1, **caractérisé** en outre en ce que les trois étages de réacteur (1a, 1b, 1c) sont formés par des tronçons superposés d'une chambre de réaction globale (1) chargée d'un remplissage en vrac continu (2) de pellets de catalyseur, et dont le tronçon central est en contact thermique avec une chambre de chauffage (4).

3. Réacteur de reformage selon la revendication 2, **caractérisé** en outre en ce que l'étage de réacteur central est formé en tant que faisceau de tubes de réacteur (13b), dont les tubes s'étendent de l'étage de réacteur supérieur (13a), situé côté entrée et faisant office de chambre de répartition, en passant à travers une chambre de chauffage (18) de position intermédiaire, jusqu'à l'étage de réacteur inférieur (13c), situé côté sortie et faisant office de chambre de collecte.

4. Réacteur de reformage selon la revendication 2, **caractérisé** en outre en ce que la chambre de chauffage est conçue sous forme de faisceau de tubes chauffants (4) dont les tubes s'étendent transversalement à travers l'étage de réacteur central (1b).
